# EUROPÄISCHE PATENTANMELDUNG

(11) **EP 2 416 101 A2**
(43) Veröffentlichungstag der Anmeldung: **08.02.2012**
(21) Anmeldenummer: 11173947.0
(22) Anmeldetag: 14.07.2011
(51) Int. Cl.: F41A 23/18, B60R 7/14, F41A 23/26

(54) **In einem militärischen Fahrzeug oder stationären Objekt montierbare Halterung für Handfeuerwaffen**

(30) Priorität: 02.08.2010 DE 102010036789
(71) Anmelder: Krauss-Maffei Wegmann GmbH & Co. KG, 80997 München (DE)
(72) Erfinder: Schneider, Lars, 80997 München (DE); Prummenbaum, Eric, 80997 München (DE)
(74) Vertreter: Feder Walter Ebert

(57) **Zusammenfassung**

Eine in einem militärischen Fahrzeug oder stationären Objekt montierbare Halterung für Handfeuerwaffen. Auf einer im Fahrzeug oder Objekt an einer Innenwand befestigbaren Grundplatte (1) sind Halterungselemente (2.1, 3.1, 4.1, 5.1) befestigt oder befestigbar. Für jeden zur Halterung vorgesehenen Waffentyp ist auf der Grundplatte (1) ein erstes, an einem ersten Bauteil (W1.1) der an die Grundplatte (1) angesetzten Handfeuerwaffe (W1) angreifendes und mit diesem Bauteil verriegelbares Hatterungsetement (2.1) und ein zweites, an einem zweiten Bauteil (W1.2) der an die Grundplatte (1) angesetzten Handfeuerwaffe (W1) angreifendes Halterungselement (3.1) befestigt oder befestigbar.

## Beschreibung

Die Erfindung betrifft eine in einem militärischen Fahrzeug oder stationären Objekt, z.B. ein Bunker, montierbare Halterung für Handfeuerwaffen mit den Merkmalen aus dem Oberbegriff des Patentanspruchs 1.

Derartige Halterungen sind grundsätzlich bekannt. Sie dienen dazu, dass beispielsweise der das militärische Fahrzeug besteigende Soldat seine Handfeuerwaffe rasch an einem festen Ort unterbringen kann und sie auch im Einsatzfall schnell von der Halterung abnehmen und bedienen kann. Die bekannten Halterungen haben den Nachteil, dass sie jeweils nur für einen bestimmten Waffentyp ausgelegt sind und nicht geeignet sind, unterschiedliche Waffentypen sicher zu haltern.

Es sind auch Halterungen bekannt, die für unterschiedliche Waffentypen verwendbar sind, diese sind dann als Sackhalterungen ausgebildet, d. h. die Handfeuerwaffe wird in einen an der Innenwand oder einem sonstigen Bauteil des Fahrzeugs befestigten Sack eingesteckt. Diese Sackhalterungen haben aber den Nachteil, dass das Einstecken und wieder Herausziehen der Waffe relativ viel Zeit beansprucht.

Der Erfindung liegt die Aufgabe zugrunde, eine Halterung für Handfeuerwaffen mit den Merkmalen aus dem Oberbegriff des Patentanspruchs 1 so auszubilden, dass unterschiedliche Typen von Handfeuerwaffen schnell und sicher angesetzt und abgenommen werden können.

Die Lösung dieser Aufgabe geschieht erfindungsgemäß mit den Merkmalen aus dem kennzeichnenden Teil des Patentanspruchs 1. Vorteilhafte Weiterbildungen der erfindungsgemäßen Halterung sind in den abhängigen Ansprüchen beschrieben.

Ein Grundgedanke der Erfindung besteht darin, an der Grundplatte für jeden zur Halterung vorgesehenen Typ einer Handfeuerwaffe mindestens zwei Halterungselemente bereitzustellen, wobei ein erstes an einem ersten Bauteil der an die Grundplatte angesetzten Waffe angreifendes Halterungselement mit diesem Bauteil verriegelbar ist und ein zweites an einem zweiten Bauteil der an die Grundplatte angesetzten Waffe angreifendes Halterungselement zur zusätzlichen Abstützung dient. Durch das verriegelbare erste Halterungselement, das beispielsweise als mit einem Kniehebel ausgerüstete Falle ausgebildet sein kann, wird eine sichere, aber schnell lösbare Fixierung der Waffe erreicht und das zweite Halterungselement, das beispielsweise als Abstützung ausgebildet sein kann, sichert die Lage der Handfeuerwaffe auf der Grundplatte zusätzlich und kann auftretende Kippmomente aufnehmen.

Je nach Art der festzuhaltenden Handfeuerwaffe kann es vorteilhaft sein, noch ein drittes Halterungselement vorzusehen, das an einem dritten Bauteil der Waffe angreift, also die Waffe beispielsweise an diesem Bauteil zusätzlich abstützt. Die Ausbildung und Anordnung der Halterungselemente kann so getroffen sein, dass ein oder mehrere Halterungselemente für unterschiedliche Waffentypen, geeignet sind, während andere Halterungsetemente nur für einen Waffentyp geeignet sind. Die nur für einen bestimmten Waffentyp geeigneten Halterungselemente werden in vorteilhafter Weise so angeordnet, dass sie bei der Umrüstung der Halterung auf einen anderen Waffentyp nicht stören. Da dies sich nicht für alle vorgesehenen Waffentypen immer erreichen lässt, hat es sich als besonders vorteilhaft erwiesen, wenn ein Halterungselement oder mehrere Halterungselemente derart lösbar auf der Grundplatte befestigt sind, dass sie entsprechend dem zu halternden Waffentyp an unterschiedliche Positionen auf der Grundplatte versetzbar sind.

Mindestens ein Halterungselement kann auch entsprechend der Waffe in unterschiedliche Positionen verschwenkbar sein. Auf diese Weise lässt sich die Anzahl der Waffentypen, für welche die Halterung geeignet ist, vergrö-βern. Ein weiterer Vorteil besteht darin, dass die Halterungselemente, die für eine erste Art von Waffe ausgelegt sind, auf der Grundplatte verbleiben können, wenn eine Waffe einer zweiten Art von der Halterung aufgenommen werden soll. Hierbei kann nämlich der Fall auftreten, dass die nicht benötigten Halterungselemente im Weg sind. Durch ein Verschwenken können die Halterungselemente aber in eine Position abseits der einzusetzenden Waffe bewegt werden, in der sie nicht weiter stören. Die nicht benötigten Halterungselemente müssen somit nicht mehr von der Grundplatte abgenommen werden. Dies bietet den Vorteil, dass keine umständliche Bevorratung der nicht benötigten Halterungselemente mehr erforderlich ist. Ferner kann die Halterung schnell je nach Art der aufzunehmenden Waffe entsprechend umgerüstet werden. Somit entfallen längerdauernde Umrüstarbeiten am Fahrzeug, wenn z.B. die Besatzung mit unterschiedlichen Waffen ausgestattet ist.

Vorteilhaft ist es, wenn das erste, mit einem Bauteil der Waffe verriegelbare Halterungselement im Bereich des hinteren Endes der an die Grundplatte angesetzten Handfeuerwaffe angreift. Das zweite Halterungselement kann dann im Bereich des Laufs der an die Grundplatte angesetzten Handfeuerwaffe den Lauf mindestens teilweise umfassend, oder am vorderen Ende der Handfeuerwaffe angreifen. Ein drittes Halterungselement kann dann in vorteilhafter Weise im Bereich des Griffs der an die Grundplatte angesetzten Handfeuerwaffe den Griff unterstützend angreifen.

Die auf der Grundplatte befestigten Halterungselemente, die lösbar in eine andere Position versetzbar sein sollen oder die verschwenkbar sein sollen, sind vorzugsweise über Steckverbindungen oder Schraubverbindungen auf der Grundplatte befestigt.

Um die Belastung der Halterungselemente zu begrenzen und Kippmomente zu vermeiden, kann es vorteilhaft sein, wenn das erste Halterungselement im Schwerpunkt oder oberhalb des Schwerpunktes der Handfeuerwaffe angreift, während das zweite Halterungselement beispielsweise unterhalb des Schwerpunktes oder im Schwerpunkt der Handfeuerwaffe angreift.

Bei einer vorteilhaften Ausführungsform der Halterung ist die Grundplatte im Fahrzeug oder Objekt derart montiert und die Halterungselemente sind derart angeordnet, dass im angesetzten Zustand der Handfeuerwaffe der Lauf der Handfeuerwaffe ggf. unter einem spitzen Winkel zur Vertikalen nach unten weist. Hierdurch kann erreicht werden, dass eine Waffe nach der Entnahme aus der Halterung schnell einsatzbereit ist. Dieser Vorteil besteht insbesondere dann, wenn die Halterung innerhalb eines militärischen Fahrzeugs oder Objekts mit beengtem Innenraum im Bereich der in der Regel schmalen Türe angeordnet ist. Die Waffenhalterung kann hierbei im unteren bis mittleren Bereich der Wand angeordnet sein. Bei einer aufrecht stehenden Waffe muss der Schütze zunächst die Waffe entnehmen und umständlich drehen, damit er die Waffe nach dem Verlassen des Fahrzeugs bedienen kann. Bei einer Anordnung der Waffe mit dem Lauf nach unten hingegen kann der Schütze die Waffe entnehmen und das Fahrzeug mit der Waffe in der gleichen Stellung, d.h. nach unten weisend, verlassen. Anschließend kann er durch einfaches Hochschwenken des Laufes die Waffe in eine Einsatzstellung bringen.

Die Halterungselemente und Zusatzhalterungselemente können so auf der Grundplatte angeordnet sein, dass sie an die jeweiligen Waffengeometrien angepasst sind und so eine gute und sichere Lagerung der Handfeuerwaffe ermöglichen, wobei das Ansetzen und Abnehmen der Handfeuerwaffe wenig Zeit beansprucht. Die Umrüstung auf einen anderen Waffentyp kann mit wenigen Handgriffen rasch durchgeführt werden.

Die Halterungsvorrichtung kann über Befestigungsmittel, insbesondere Schraubverbindungen, mit der Innenwand des Fahrzeugs oder Objekts befestigt sein.

Die Erfindung betrifft ferner ein Fahrzeug oder ein Objekt mit einer bereits beschriebenen Halterung.

Im Folgenden wird anhand der beigefügten Zeichnungen ein Ausführungsbeispiel für die erfindungsgemäße Halterung beschrieben.

### In den Zeichnungen zeigen:

- Fig. 1: in Aufsicht die Halterung mit einer angesetzten Handfeuerwaffe vom Typ "MP 7";
- Fig. 2: in gleicher Darstellung die Halterung nach Fig. 1 mit einer angesetzten Waffe vom Typ "G36 kurz".

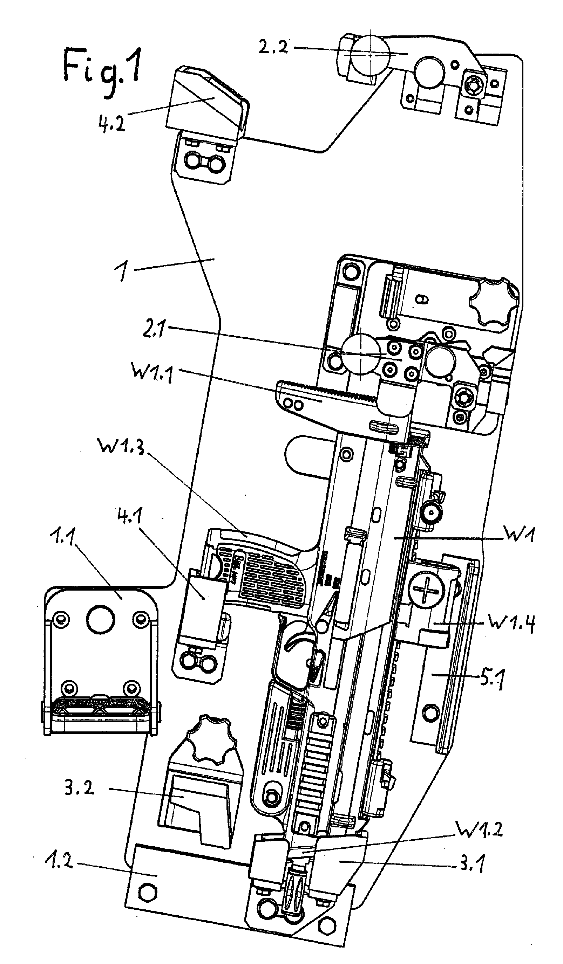

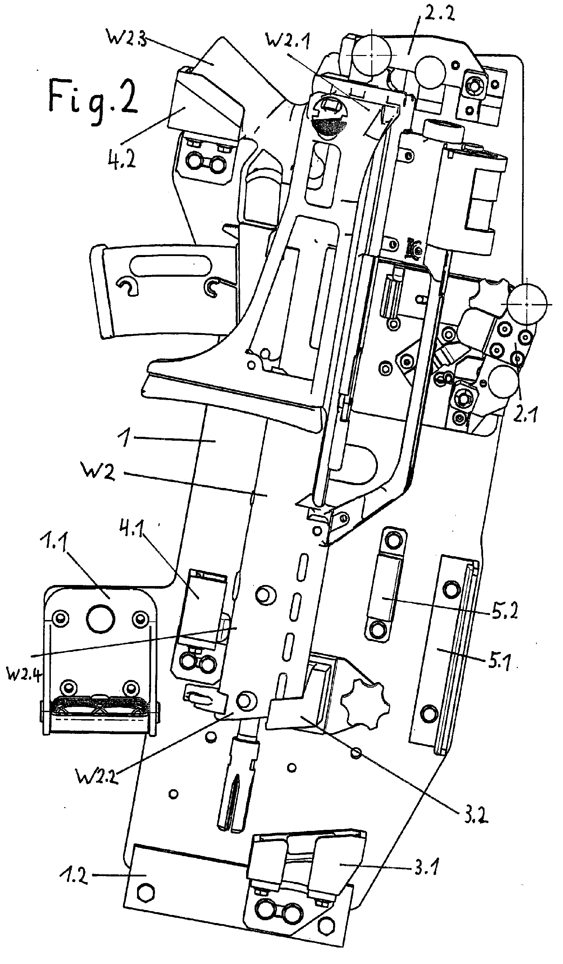

Die in den Fig. 1 und 2 dargestellte Halterung für eine Handfeuerwaffe besitzt eine Grundplatte 1, die in nicht eigens dargestellter Weise über Befestigungslaschen 1.1 und 1.2 an der Innenwand eines militärischen Fahrzeugs oder eines stationären Objekts befestigbar ist.

Auf der Grundplatte 1 sind erste Halterungselemente 2.1 und 2.2 angeordnet, die derart ausgebildet sind, dass sie mit einem Bauteil der Waffe, beispielsweise dem hinteren Ende der Waffe, beim Ansetzen der Waffe an die Grundplatte 1 verriegelbar sind. Im Ausführungsbeispiel sind sie als am hinteren Bauteil der Handfeuerwaffe einrastende Falle ausgebildet. Die ersten Halterungselemente 2.1 und 2.2 können über Steckverbindungen mit der Grundplatte 1 verbunden sein, so dass sie aus der in Fig. 1 dargestellten, mit 2.1 bezeichneten Position in die mit 2.2 bezeichnete Position umgesteckt werden können. In Fig. 1 dient das erste Halterungselement 2.1 zur Fixierung der Waffe W1 vom Typ "MP7" am hinteren Ende W1.1.

In der Darstellung gemäß Fig. 2 dient das in einer versetzten Position angeordnete Halterungselement 2.2 zur Fixierung der Waffe W2 vom Typ "G36 kurz" am hinteren Ende W2.1.

Anstelle eines Umsteckens der ersten Halterung kann wie aus Fig. 2 ersichtlich, die erste Halterung 2.1 auch in eine Position verschwenkt werden, in der sie die Halterung der Waffe W2 nicht behindert.

In der Darstellung nach Fig. 1 dient ein zweites Halterungselement 3.1 zum Festhalten des Laufs W1.2 der Waffe W1. Dieses Halterungselement ist so ausgestaltet, dass es den Lauf W1.2 teilweise umfasst. Ein weiteres zweites Halterungselement 3.2 ist in der Darstellung nach Fig. 1 in eine Position versetzt, in der es die Anordnung der Waffe W1 nicht behindert. Dieses Halterungselement 3.2 dient, wie aus Fig. 2 ersichtlich, zum Abstützen des vorderen Endes W2.2 der Waffe W2, in dem es aus der in Fig. 1 dargestellten Position an die in Fig. 2 dargestellte Position versetzt wurde. Die Befestigung erfolgt mittels eines manuell zu bedienenden Schraubgriffs.

Das zweite Halterungselement 3.1 ist nach dem Umrüsten noch an der Grundplatte befestigt, so dass kein gesonderter Behälter für eine Bevorratung der nicht benötigten Halterungselemente erforderlich ist. Das Halterungselement 3.1 muss allerdings nicht versetzt werden, da es das Halten der Waffe W2 nicht behindert.

Wenn statt einer Waffe vom Typ "G36 kurz" eine Waffe vom Typ "G36", welche einen längeren Lauf besitzt, eingesetzt werden soll, kann zusätzlich in nicht dargestellter Weise eine den Lauf umfassende zweite Halterung vorgesehen sein.

Bei der Darstellung gemäß Fig. 1 wird die Waffe W1 weiterhin am Griff W1.3 durch eine dritte Halterung 4.1 abgestützt, die auch in Darstellung nach Fig. 2 mit zur Abstützung der Waffe W2 an einem Bauteil W2.4 der Waffe dient.

Die Waffe W2 wird gemäß der Darstellung nach Fig. 2 am Griff W2.3 mittels eines dritten Halterungselementes 4.2 abgestützt. Wie weiterhin aus Fig. 1 zu erkennen, sind von der Waffe W1 auskragende Bauteile W1.4 durch zusätzliche Halterungselemente 5.1 und 5.2 abgestützt, die an einer Stelle angeordnet sind, wo sie, wie aus Fig. 2 ersichtlich, die Anordnung der Waffe W2 nicht stören.

Die lösbar mit der Grundplatte 1 verbundenen Halterungselemente 2.1, 2.2, 3.1, 3.2, 4.1 und 4.2 und/oder die Zusatz-Hatterungselemente 5.1 und 5.2 können über arretierbare Steckverbindungen, beispielsweise Kugelsperrbolzen oder auch über Schraubverbindungen auf der Grundplatte 1 befestigt sein.

Die Waffen W1 und W2 sind mit der Mündung nach unten in der Waffenhalterung gehalten. Somit ergibt sich für einen Schützen eine kurze Richtzeit nach der Entnahme der Waffe aus der Halterung.

Mit der beschriebenen Waffenhalterung ist das Umrüsten der Halterung von einem Waffentyp auf den anderen mit möglichst wenigen Handgriffen rasch durchführbar. Ferner ist die Handfeuerwaffe exakt und sicher in die Halterung einsetzbar. Nach Möglichkeit sollten an den Handfeuerwaffen montierte Anbaukomponenten (z. B. Laser-Vorsatz u.a.) beim Einsetzen in die Halterung an der Handfeuerwaffe verbleiben können.

## Patentansprüche

1. In einem militärischen Fahrzeug oder stationären Objekt montierbare Halterung für Handfeuerwaffen (W1, W2) mit einer im Fahrzeug oder Objekt an einer Innenwand befestigbaren Grundplatte (1), **dadurch gekennzeichnet, dass** auf der Grundplatte (1) für jeden zur Halterung vorgesehenen Waffentyp ein erstes an einem ersten Bauteil (W1.1, W2.1) der an die Grundplatte (1) angesetzten Handfeuerwaffe (W1, W2) angreifendes und mit diesem Bauteil verriegelbares Halterungselement (2.1, 2.2) und ein zweites, an einem zweiten Bauteil (W1.2, W2.2) der an die Grundplatte (1) angesetzten Handfeuerwaffe (W1, W2) angreifendes Halterungselement (3.1, 3.2, 3.2') befestigt oder befestigbar ist.

2. Halterung nach Anspruch 1, **gekennzeichnet durch** mindestens ein drittes, an einem dritten Bauteil (W1.3, W2.3) der an die Grundplatte (1) angesetzten Handfeuerwaffe (W1, W2) angreifendes Halterungselement (4.1, 4.2).

3. Halterung nach Anspruch 1 oder 2, **dadurch gekennzeichnet, dass** das erste Halterungselement (2.1, 2.2) als in ein Bauteil (W1.1, W2.1) der Handfeuerwaffe (W1, W2) einrastende Falle ausgebildet ist.

4. Halterung nach einem der Ansprüche 1 bis 3, **dadurch gekennzeichnet, dass** das erste Halterungselement (2.1, 2.2) im Bereich des hinteren Endes (W1.1, W2.1) der an die Grundplatte (1) angesetzten Handfeuerwaffe (W1, W2) angreift und/oder dass das zweite Halterungselement (3.1) im Bereich des Laufs (W1.2) der an die Grundplatte (1) angesetzten Handfeuerwaffe (W1) den Lauf mindestens teilweise umfassend angreift.

5. Halterung nach einem der Ansprüche 1 bis 4, **dadurch gekennzeichnet, dass** das erste und/oder das zweite und/oder das dritte Hatterungsetement (2.1, 2.2, 3.1, 3.2, 4.1, 4.2) entsprechend dem zu halternden Waffentyp in unterschiedliche Positionen verschwenkbar sind.

6. Halterung nach einem der Ansprüche 1 bis 5, **dadurch gekennzeichnet, dass** auf der Grundplatte (1) mindestens zwei in ihrer Ausbildung und Positionierung an unterschiedliche Waffentypen angepasste erste, zweite oder dritte Halterungselemente befestigt oder befestigbar sind.

7. Halterung nach einem der Ansprüche 1 bis 6, **dadurch gekennzeichnet, dass** auf der Grundplatte (1) in ihrer Ausbildung und Positionierung an unterschiedliche Waffentypen angepasste Zusatz-Halterungselemente (5.1, 5.2) befestigt oder befestigbar sind.

8. Halterung nach Anspruch 7, **dadurch gekennzeichnet, dass** mindestens eins der Zusatz-Halterungselemente (5.1, 5.2) derart ausgebildet und positioniert ist, dass es im an die Grundplatte (1) angesetzten Zustand der Handfeuerwaffe (W1) quer zur Längsachse der Handfeuerwaffe auskragende Bauteile (W1.4) der Handfeuerwaffe abstützt.

9. Halterung nach Anspruch 7 oder 8, **dadurch gekennzeichnet, dass** mindestens eines der Zusatz-Halterungselemente lösbar auf der Grundplatte (1) befestigt und an unterschiedliche Positionen auf der Grundplatte entsprechend dem zu halternden Waffentyp versetzbar ist und/oder dass mindestens eines der Zusatz-Halterungselemente entsprechend dem zu halternden Waffentyp in unterschiedliche Positionen verschwenkbar ist.

10. Halterung nach einem der Ansprüche 1 bis 9, **dadurch gekennzeichnet, dass** die lösbar mit der Grundplatte (1) verbundenen Halterungselemente (2.1, 2.2, 3.1, 3.2, 4.1, 4.2) und/oder Zusatz-Halterungselemente (5.1, 5.2) über arretierbare Steckverbindungen auf der Grundplatte (1) befestigt sind.

11. Halterung nach einem der Ansprüche 1 bis 9, **dadurch gekennzeichnet, dass** die lösbar mit der Grundplatte (1) verbundenen Halterungselemente (2.1, 2.2, 3.1, 3.2, 4.1, 4.2) und/oder Zusatz-Halterungselemente (5.1, 5.2) über Schraubverbindungen auf der Grundplatte (1) befestigt sind.

12. Halterung nach einem der Ansprüche 1 bis 11, **dadurch gekennzeichnet, dass** das erste Halterungselement (2.1, 2.2) im Schwerpunkt oder oberhalb des Schwerpunktes der Handfeuerwaffe (W1, W2) angreift.

13. Halterung nach einem der Ansprüche 1 bis 12, **dadurch gekennzeichnet, dass** das zweite Halterungselement (3.1, 3.2) unterhalb des Schwerpunkts oder im Schwerpunkt der Handfeuerwaffe (W1, W2) angreift.

14. Halterung nach einem der Ansprüche 1 bis 13, **dadurch gekennzeichnet, dass** die Grundplatte (1) im Fahrzeug oder Objekt derart montiert und die Halterungselemente (2.1, 2.2, 3.1, 3.2, 4.1, 4.2) derart angeordnet sind, dass im angesetzten Zustand der Handfeuerwaffe (W1, W2) der Lauf (W1.2, W2.2) der Handfeuerwaffe nach unten weist, insbesondere unter einem spitzen Winkel zur Vertikalen.

15. Fahrzeug oder Objekt mit einer Halterung nach einem der vorhergehenden Ansprüche.
